# EUROPÄISCHE PATENTANMELDUNG

(11) **EP 2 960 488 A1**
(43) Veröffentlichungstag der Anmeldung: **30.12.2015**
(21) Anmeldenummer: 15166934.8
(22) Anmeldetag: 08.05.2015
(51) Int. Cl.: F02M 65/00, F02M 51/00, F02M 57/00, G01L 9/00

(54) **KRAFTSTOFFINJEKTOR**

(30) Priorität: 27.06.2014 DE 102014212458
(71) Anmelder: ROBERT BOSCH GMBH, 70442 Stuttgart (DE)
(72) Erfinder: Forke, Martin, 70499 Stuttgart (DE)

(57) **Zusammenfassung**

Die Erfindung betrifft einen Kraftstoffinjektor (10), mit einem Injektorgehäuse (11), in dem eine Hochdruckbohrung (15) zur Versorgung des Injektorgehäuses (11) mit Kraftstoff ausgebildet ist, und mit einem Sensorelement (30) zur Erfassung einer Deformation eines die Hochdruckbohrung (15) begrenzenden Wandabschnitts (37) des Injektorgehäuses (11). Erfindungsgemäß ist es vorgesehen, dass das Sensorelement (30) im Bereich einer Ausnehmung (20) des Injektorgehäuses (11) in Wirkverbindung mit dem Wandabschnitt (37) angeordnet ist, wobei die Ausnehmung (20) als eine umfangsseitig geschlossene Vertiefung mit Seitenwänden (21, 22, 23, 24) und einem Bodenabschnitt (26) ausgebildet ist, und dass das Sensorelement (30) innerhalb des Querschnitts des Injektorgehäuses (11) angeordnet ist.

## Beschreibung

### Stand der Technik

Die Erfindung betrifft einen Kraftstoffinjektor nach dem Oberbegriff des Anspruchs 1.

Ein derartiger Kraftstoffinjektor ist als Bestandteil eines Kraftstoffeinspritzsystems für Brennkraftmaschinen aus der DE 10 2005 053 683 A1 der Anmelderin bekannt. Der bekannte Kraftstoffinjektor weist eine Hochdruckbohrung auf, die einerseits über eine Verbindungsleitung mit einem Kraftstoffhochdruckspeicher (Rail) verbunden ist, und in der Praxis insbesondere in einem im Injektorgehäuse ausgebildeten Hochdruckraum mündet. In dem Hochdruckraum ist in üblicher Weise eine Düsennadel zum Einspritzen von Kraftstoff in den Brennraum der Brennkraftmaschine heb- und senkbar angeordnet.

Um beispielsweise Emissionsnormen über die gesamte Lebensdauer des Kraftstoffeinspritzsystems gewährleisten zu können und/oder den Kraftstoffverbrauch weiter zu vermindern, ist es notwendig, die zur Verbrennung in den Brennraum eingespritzte Kraftstoffmenge möglichst genau zu kennen, um den Einspritzvorgang entsprechend steuern zu können. Insbesondere können sich beispielsweise aufgrund von Verschleiß von Bauteilen oder Ablagerungen über die Lebensdauer des Kraftstoffinjektors betrachtet Öffnungs- und/oder Schließzeitpunkte eines Einspritzglieds (Düsennadel) trotz stets gleicher (zeitlicher) Ansteuerung des Kraftstoffinjektors ändern, was zu verschlechterten Abgaswerten und/oder zu verminderter Leistung führen kann. Aus der genannten Schrift ist es daher bekannt, im Bereich des Außenumfangs des Injektorgehäuses ein Sensorelement, insbesondere in Form eines Dehnmessstreifens, anzuordnen, das eine Deformation der Hochdruckbohrung erfasst. Eine derartige Deformation der Hochdruckbohrung kommt typischerweise dann zustande, wenn das Einspritzglied (Düsennadel) von einem Sitz abhebt, um Kraftstoff in den Brennraum der Brennkraftmaschine einzuspritzen. Der daraus resultierende Druckabfall im Hochdruckraum wird durch nachströmenden Kraftstoff aus der Hochdruckbohrung kompensiert, wobei während der Kompensation der hydraulische Druck in der Hochdruckbohrung vermindert ist. Ebenso steigt beim Schließen des Einspritzglieds bzw. der Düsennadel, wenn sich diese ihrem Sitz nähert, der hydraulische Druck in der Hochdruckbohrung an, da die über wenigstens eine Einspritzöffnung in den Brennraum der Brennkraftmaschine abgegebene Einspritzmenge reduziert wird. Nähere Angaben bezüglich einer vorteilhaften Anordnung des Sensorelements an dem Injektorgehäuse sind der genannten Schrift jedoch nicht entnehmbar. Insbesondere ist der Schrift keine Anordnung des Sensorelements entnehmbar, die dazu geeignet ist, bereits relativ geringe Druckschwankungen in der Hochdruckbohrung sicher zu erfassen. Bei einem am Außenumfang eines Injektorgehäuses angeordneten Sensorelement besteht darüber hinaus der Nachteil, dass der Einbau des Kraftstoffinjektors in eine bestehende Brennkraftmaschine infolge des vergrößerten Querschnitts des Kraftstoffinjektors im Bereich des Sensorelements aufgrund des nur begrenzt zur Verfügung stehenden Einbauraums oftmals kritisch ist.

### Offenbarung der Erfindung

Ausgehend von dem dargestellten Stand der Technik liegt der Erfindung die Aufgabe zugrunde, einen Kraftstoffinjektor nach dem Oberbegriff des Anspruchs 1 derart weiterzubilden, dass dieser dazu ausgebildet ist, bereits geringe Druckschwankungen in der Hochdruckbohrung des Injektorgehäuses zu erfassen. Weiterhin ist es Aufgabe der Erfindung, den Einbauraum eines derartigen Kraftstoffinjektors trotz der Sensoreinrichtung möglichst gering zu halten. Diese Aufgabe wird erfindungsgemäß bei einem Kraftstoffinjektor mit den Merkmalen des Anspruchs 1 dadurch gelöst, dass das Sensorelement im Bereich einer Ausnehmung des Injektorgehäuses in Wirkverbindung mit einem Wandabschnitt des Injektorgehäuses angeordnet ist, wobei die Aussparung als eine umfangsseitig geschlossene Vertiefung mit Seitenwänden und einem Bodenabschnitt ausgebildet ist, und dass das Sensorelement innerhalb des Querschnitts des Injektorgehäuses angeordnet ist. Eine derartige erfindungsgemäße Anordnung des Sensorelements innerhalb einer Ausnehmung des Injektorgehäuses löst zum einen die Aufgabe, bereits relativ geringe Druckschwankungen in der Hochdruckbohrung erfassen zu können, da durch die Ausnehmung eine in Bezug auf die Hochdruckbohrung nahe Anordnung des Sensorelements ermöglicht wird. Die Ausnehmung hat insbesondere zur Folge, dass aufgrund einer verminderten Wanddicke im Bereich der Hochdruckbohrung (in Richtung zum Sensorelement) am Anbauort des Sensorelements bei Druckschwankungen relativ große Deformationen des Wandabschnitts auftreten, mit einer entsprechend hohen Auflösung durch das Sensorelement. Darüber hinaus ermöglicht es die Ausnehmung, das Sensorelement insbesondere vollständig innerhalb des Querschnitts des Kraftstoffinjektors anzuordnen, so dass die Baugröße des Kraftstoffinjektors im Bereich des Sensorelements entweder nicht, oder lediglich geringfügig (beispielsweise wegen einer Kabelzuführung für das Sensorelement) vergrößert ist. In jedem Fall wird eine in Bezug auf die Einbausituation in einer Brennkraftmaschine vorteilhafte Ausbildung des Kraftstoffinjektors bzw. dessen Injektorgehäuses erzielt.

Vorteilhafte Weiterbildungen des erfindungsgemäßen Kraftstoffinjektors sind in den Unteransprüchen angeführt.

In einer ersten konstruktiven Anordnung der Hochdruckbohrung und der Ausnehmung ist es vorgesehen, dass die Hochdruckbohrung außermittig bzw. exzentrisch zu einer Längsachse des Injektorgehäuses angeordnet ist und dass der Bodenabschnitt der Ausnehmung parallel zu einer Mittelebene der Hochdruckbohrung verläuft.

Zur Verringerung der Kerbwirkung der Ausnehmung ist es darüber hinaus von Vorteil, wenn die Seitenwände der Ausnehmung zumindest teilweise gerundet ausgebildet sind.

Als besonders günstig für die Anordnung der Ausnehmung hat es sich herausgestellt, wenn diese an einem Haltekörper des Injektorgehäuses in geringem Abstand unterhalb einer Kabelzuführung für einen Aktor auf der einer Einspritzöffnung des Injektorgehäuses zugewandten Seite angeordnet ist. Eine derartige Anordnung hat insbesondere den Vorteil, dass beispielsweise die Kabelzuführung für den Aktor und eine Kabelverbindung für das Sensorelement gemeinsam bzw. gebündelt ausgebildet und geführt werden kann. Darüber hinaus ermöglicht eine derartige Anordnung, die in der Praxis unterhalb einer Steckerumspritzung Platz findet, eine Abschirmung gegen Medien und somit einen besonders geschützten Einbauort für das Sensorelement.

Zur Erhöhung der Empfindlichkeit des Sensorelements ist es darüber hinaus von Vorteil, wenn der Flächenschwerpunkt des Sensorelements im Bereich der Verbindung an dem Wandabschnitt zur Hochdruckbohrung einen minimalen Abstand aufweist.

Bevorzugt ist die Verwendung eines Sensorelements, das als Piezoelement ausgebildet ist. Ein derartiges Element hat den Vorteil, dass es keine Spannungsversorgung benötigt sondern in Abhängigkeit einer Deformation ein Spannungssignal als Ausgangssignal liefert.

Darüber hinaus ist es von Vorteil, wenn das Piezoelement an dem Bodenabschnitt mittels einer Klebeverbindung befestigt ist. Dadurch sind keine zusätzlichen, üblicherweise mechanischen Bauteile zur Befestigung des Piezoelements erforderlich, und der Platzbedarf wird durch den Verzicht auf derartige Bauteile zusätzlich minimiert.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teilbereich eines erfindungsgemäßen Kraftstoffinjektors im Bereich eines Haltekörpers in perspektivischer Ansicht,
- Fig. 2: eine Seitenansicht auf den Kraftstoffinjektor gemäß Fig. 1 im Bereich seiner Ausnehmung zur Aufnahme des Sensorelements und
- Fig. 3: einen Querschnitt in der Ebene III - III der Fig. 2.

Gleiche Elemente bzw. Elemente mit gleicher Funktion sind in den Figuren mit den gleichen Bezugsziffern versehen.

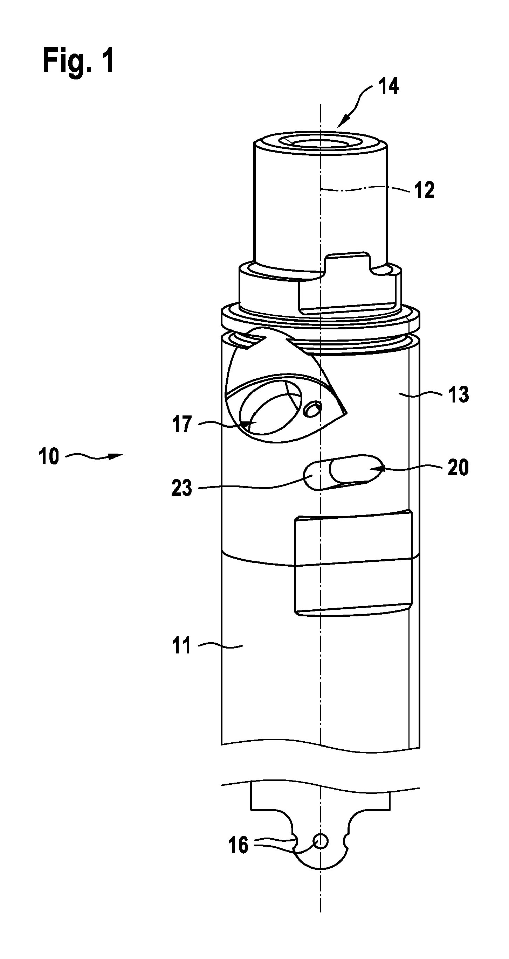

In der Fig. 1 ist der einem Brennraum einer nicht dargestellten Brennkraftmaschine abgewandete Endbereich eines erfindungsgemäßen Kraftstoffinjektors 10 im Detail dargestellt. Der Kraftstoffinjektor 10 ist Bestandteil eines sogenannten Common-Rail-Einspritzsystems und dient dem Einspritzen von Kraftstoff in den Brennraum der Brennkraftmaschine. Hierzu sind an dem dem Brennraum der Brennkraftmaschine zugewandten Endbereich des Kraftstoffinjektors 10 Einspritzöffnungen 16 ausgebildet, die mittels eines nicht dargestellten Einspritzglieds (Düsennadel) zum Einspritzen des Kraftstoffs freigebbar bzw. zum Vermeiden des Einspritzens des Kraftstoffs verschließbar sind.

Der Kraftstoffinjektor 10 weist ein üblicherweise aus mehreren Bauteilen zusammengesetztes Injektorgehäuse 11 mit einer Längsachse 12 auf. Das Injektorgehäuse 11 wird im dargestellten Zeichnungsausschnitt durch einen aus Metall bestehenden Haltekörper 13 ausgebildet. Der im Wesentlichen zylindrisch ausgebildete Haltekörper 13 weist einen Kraftstoffeintritt 14 auf, der dazu ausgebildet ist, mit einer nicht dargestellten Verbindungsleitung mit einem unter System- bzw. Hochdruck stehenden Kraftstoffspeicher (Rail) verbunden zu werden. Innerhalb des Injektorgehäuses 11 bzw. des Haltekörpers 13 geht der Kraftstoffeintritt 14 in eine Hochdruckbohrung 15 über, welche üblicherweise aus mehreren, in Bezug zur Längsachse 13 unterschiedlich geneigt angeordneten Bohrungsabschnitten besteht. Die Hochdruckbohrung 15 dient der Versorgung eines im Injektorgehäuse 11 ausgebildeten Hochdruckraums (nicht dargestellt), in dem auch das Einspritzglied angeordnet ist.

In axialer Richtung unterhalb des Kraftstoffeintritts 14 ist im Haltekörper 13 ein Kabeleinführbereich 17 ausgebildet, der mittels einer Anschlussleitung (nicht dargestellt) der elektrischen Kontaktierung eines in dem Haltekörper 13 angeordneten, als Piezoaktor ausgebildeten Aktuators dient, der zur zumindest mittelbaren Ansteuerung des Einspritzglieds dient. Auf der dem Kraftstoffeintritt 14 abgewandten Seite des Kabeleinführbereichs 17 ist in relativ geringem Abstand zum Kabeleinführbereich 17 eine Ausnehmung 20, vorzugsweise durch Fräsen, ausgebildet.

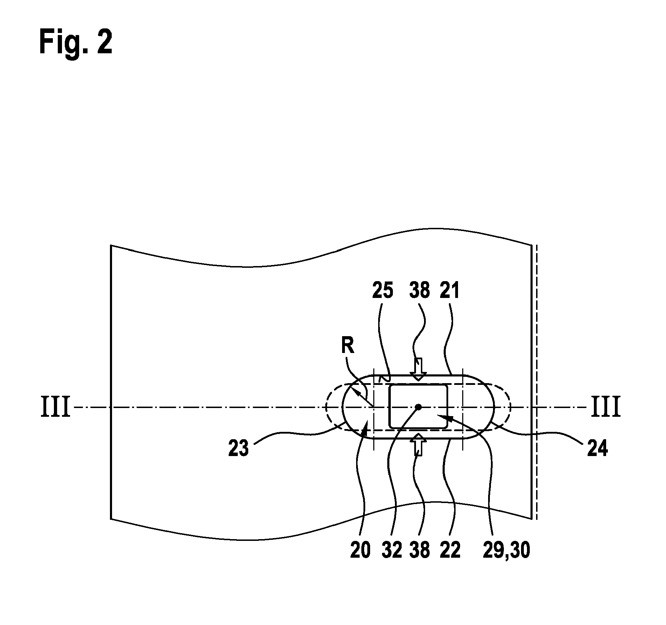

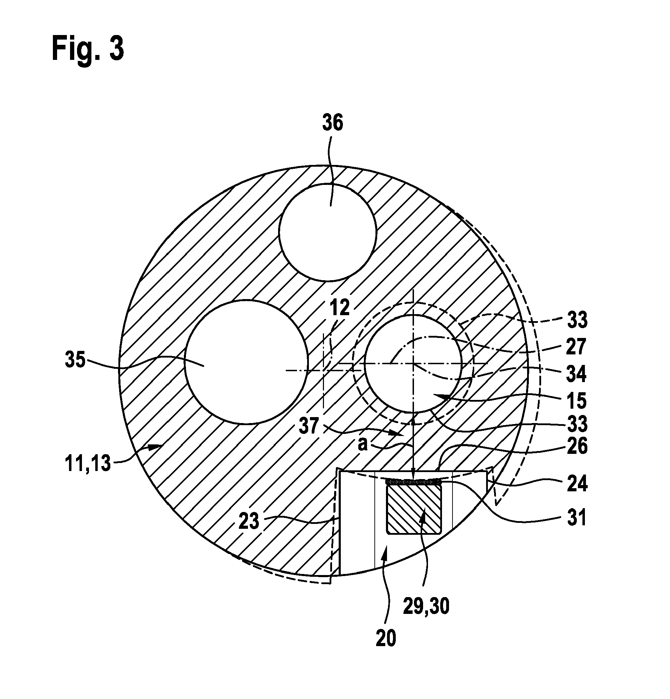

Wie insbesondere anhand einer Zusammenschau der Fig. 1 bis 3 erkennbar ist, weist die Ausnehmung 20 eine obere und untere, jeweils ebene Seitenwand 21, 22 sowie zwei, in Form von mit einem Radius R ausgestatteten, gerundeten Verbindungswänden 23, 24 auf, die die beiden Seitenwände 21, 22 miteinander verbinden. Entsprechend der Darstellung der Fig. 2 ist die Ausnehmung 20 in Seitenansicht mit einer geschlossenen Umfangswand 25 ausgebildet. Darüber hinaus weist die Ausnehmung 20 einen Bodenabschnitt 26 auf, der der Anordnung bzw. Befestigung eines als Piezoelement 29 ausgebildeten Sensorelements 30 dient. Insbesondere ist das Sensorelement 30 über eine (starre) Klebeschicht 31 mit dem Bodenabschnitt 26 verbunden. Alternativ kann auch eine Lötverbindung o.ä. vorgesehen sein. Das im Ausführungsbeispiel eine rechteckförmige Grundfläche aufweisende Sensorelement 30 ist am Bodenabschnitt 26 bzw. innerhalb der Ausnehmung 20 derart positioniert, dass ein mittlerer Bereich bzw. der Flächenschwerpunkt 32 des Sensorelements 30 an der Verbindungsstelle zum Bodenabschnitt 26 zu einer die Hochdruckbohrung 15 begrenzenden Wand 33 einen minimalen Abstand a aufweist, wobei der Bodenabschnitt 26 parallel zu einer Mittelebene 27 der Hochdruckbohrung 15 verläuft. Darüber hinaus wird erläutert, dass die Ausnehmung 20 in einem Bereich des Haltekörpers 13 angeordnet ist, in dem die Hochdruckbohrung 15 parallel zur Längsachse 12 des Injektorgehäuses 11 verläuft. Weiterhin ist die Längsachse 34 der Hochdruckbohrung 15 außermittig zur Längsachse 12 des Injektorgehäuses 11 angeordnet. Wie anhand der Fig. 3 erkennbar ist, ist innerhalb des Querschnitts des Haltekörpers 13 noch ein Kabelzuführkanal 35 für den angesprochenen Aktuator, sowie ein Kraftstoffrücklaufkanal 36 angeordnet.

In Abhängigkeit des Einspritzzyklus des Kraftstoffinjektors 10, insbesondere in Abhängigkeit des Freigebens bzw. Verschließens der Einspritzöffnungen 16 im Injektorgehäuse 11, ist der hydraulische Druck in der Hochdruckbohrung 15 unterschiedlich. Eine Druckerhöhung führt zu einer Ausdehnung bzw. einer Durchmesservergrößerung der Hochdruckbohrung 15, was durch die gestrichelte Darstellung in der Wand 33 der Hochdruckbohrung 15 verdeutlicht sein soll. Die Deformation bzw. Vergrößerung des Querschnitts der Hochdruckbohrung 15 führt auch zu einer Deformation des Wandabschnitts 37 zwischen der Hochdruckbohrung 15 und dem Bodenabschnitt 26 der Ausnehmung 20, in deren Bereich das Sensorelement 30 angeordnet bzw. befestigt ist. Insbesondere führt die Deformation der Kontaktfläche zwischen dem Sensorelement 30 und dem Bodenabschnitt 26 zur Erzeugung einer (mechanischen) Druckspannung in dem Sensorelement 30, verdeutlicht durch die Pfeile 38, wodurch das als Piezoelement 29 ausgebildete Sensorelement 30 ein Spannungssignal erzeugt, das von einer mit dem Sensorelement 30 verbundenen Steuereinrichtung (nicht dargestellt) auswertbar ist. Aus der Höhe des von dem Sensorelement 30 abgegebenen Spannungssignals kann die Steuereinrichtung auf den Druck in der Hochdruckbohrung 15, und dadurch auch auf die Stellung des Einspritzglieds schließen.

Wie insbesondere anhand der Fig. 3 erkennbar ist, ist durch eine entsprechende Ausgestaltung bzw. Dimensionierung der Ausnehmung 20 sichergestellt, dass das Sensorelement 30 den Außenumfang des Haltekörpers 13 bzw. des Injektorgehäuses 11 nicht überragt, sondern innerhalb des Querschnitts des Haltekörpers 13 angeordnet ist.

Der soweit beschriebene Kraftstoffinjektor 10 kann in vielfältiger Art und Weise abgewandelt bzw. modifiziert werden, ohne vom Erfindungsgedanken abzuweichen.

## Patentansprüche

1. Kraftstoffinjektor (10), mit einem Injektorgehäuse (11), in dem eine Hochdruckbohrung (15) zur Versorgung des Injektorgehäuses (11) mit Kraftstoff ausgebildet ist, und mit einem Sensorelement (30) zur Erfassung einer Deformation eines die Hochdruckbohrung (15) begrenzenden Wandabschnitts (37) des Injektorgehäuses (11),
**dadurch gekennzeichnet,**
**dass** das Sensorelement (30) im Bereich einer Ausnehmung (20) des Injektorgehäuses (11) in Wirkverbindung mit dem Wandabschnitt (37) angeordnet ist, wobei die Ausnehmung (20) als eine umfangsseitig geschlossene Vertiefung mit Seitenwänden (21, 22, 23, 24) und einem Bodenabschnitt (26) ausgebildet ist, und dass das Sensorelement (30) innerhalb des Querschnitts des Injektorgehäuses (11) angeordnet ist.

2. Kraftstoffinjektor nach Anspruch 1,
**dadurch gekennzeichnet,**
**dass** die Hochdruckbohrung (15) außermittig zu einer Längsachse (12) des Injektorgehäuses (11) angeordnet ist und dass der Bodenabschnitt (26) parallel zu einer Mittelebene (27) der Hochdruckbohrung (15) verläuft.

3. Kraftstoffinjektor nach Anspruch 1 oder 2,
**dadurch gekennzeichnet,**
**dass** die Seitenwände (23, 24) der Ausnehmung (20) zumindest teilweise gerundet ausgebildet sind.

4. Kraftstoffinjektor nach einem der Ansprüche 1 bis 3,
**dadurch gekennzeichnet,**
**dass** die Ausnehmung (20) an einem Haltekörper (13) des Injektorgehäuses (11) in geringem Abstand unterhalb einer Kabelzuführung (17) für einen Aktor auf der einer Einspritzöffnung (16) des Injektorgehäuses (11) zugewandten Seite angeordnet ist.

5. Kraftstoffinjektor nach einem der Ansprüche 1 bis 4,
**dadurch gekennzeichnet,**
**dass** der Flächenschwerpunkt (32) des Sensorelements (30) im Bereich der Verbindung an dem Bodenabschnitt (26) zur Hochdruckbohrung (15) einen minimalen Abstand (a) aufweist.

6. Kraftstoffinjektor nach einem der Ansprüche 1 bis 5,
**dadurch gekennzeichnet,**
**dass** das Sensorelement (30) als Piezoelement (29) ausgebildet ist.

7. Kraftstoffinjektor nach Anspruch 6,
**dadurch gekennzeichnet,**
**dass** das Piezoelement (29) an dem Bodenabschnitt (26) mittels einer Klebeverbindung (31) befestigt ist.
